(19) Europäisches Patentamt

European Patent Office

Office européen des brevets

(11) **EP 1 024 400 B1**

(12) **EUROPÄISCHE PATENTSCHRIFT**

(45) Veröffentlichungstag und Bekanntmachung des Hinweises auf die Patenterteilung:
**13.10.2004   Patentblatt 2004/42**

(51) Int Cl.$^7$: **G03B 27/72**, G03B 27/80

(21) Anmeldenummer: **99101595.9**

(22) Anmeldetag: **29.01.1999**

(54) **Maske und Verfahren zum Ändern eines Helligkeitsprofils einer fotografischen Abbildung beim fotografischen oder digitalen Kopieren**

Mask and method of varying the luminance profile of a photographic image for photographic or digital printing

Masque et procédé pour modifier la distribution de luminance d'un tirage photographique dans une imprimante photographique ou digitale

(84) Benannte Vertragsstaaten:
**CH DE FR GB IT LI**

(43) Veröffentlichungstag der Anmeldung:
**02.08.2000   Patentblatt 2000/31**

(73) Patentinhaber: **IMIP LLC**
**Wilmington, Delaware 19801 (US)**

(72) Erfinder: **Kraft, Walter**
**8049 Zürich (CH)**

(74) Vertreter: **Schwabe - Sandmair - Marx**
**Patentanwälte**
**P.O. Box 860245**
**81629 München (DE)**

(56) Entgegenhaltungen:
DE-A- 4 040 498          DE-A- 19 703 063
US-A- 5 119 125          US-A- 5 365 353
US-A- 5 661 544          US-A- 5 805 274

• **R.W.G. HUNT: "The Reproduction of Colour" 1995 , FOUNTAIN PRESS , ENGLAND XP002109511 * Seite 100 - Seite 101 * * Seite 319 - Seite 360 * * Seite 628 - Seite 631 * * Seite 672 - Seite 702 ***

**Beschreibung**

Die vorliegende Erfindung betrifft ein Verfahren zum Bestimmen einer Maske zum Ändern eines Helligkeitsprofils einer fotografischen Abbildung bzw. Kopie gemäß Anspruch 1. Weiter betrifft die Erfindung Verfahren zum Ändern eines Helligkeitsprofils beim Erstellen einer Abbildung bzw. Kopie mittels der erfindungsgemäß bestimmten Maske. Schließlich betrifft die Erfindung einen optischen Printer und einen digitalen Printer, die die erfindungsgemäß bestimmte Maske verwenden.

Der Begriff der "Fotografie", wie hierin verwendet, bezeichnet die (dauerhafte) Erfassung durch elektromagnetische Strahlung (insbesondere Licht) erzeugter Bilder durch hierfür geeignete Mittel (z. B. Fotoapparat mit Film, Digitalkamera mit CCD-Chip, Filmkamera, Videokamera, usw.).

Das Gebiet der vorliegenden Erfindung betrifft die Verarbeitung von das erzeugte Bild darstellenden fotografischer Bildinformation auf rechnerischem und/oder optischem Wege. Die fotografische Bildinformation wird dabei z. B. durch Abtasten einer fotografischen Vorlage (z.B. Film) erfaßt und in digitale Bilddaten umgewandelt. Auch kann die fotografische Bildinformation bereits digital vorliegen. Sie kann dann z.B. elektronisch abgespeichert sein (z. B. CD-ROM, DVD), über ein Netzwerk (z.B. LAN oder Internet) abrufbar sein oder z.B. über eine Digitalkamera erfaßt sein.

Fotografische Bilddaten können wie herkömmliche Bilddaten auf einem physischen Medium abgebildet werden. Als physisches Medium dient z.B. Fotopapier, auf das fotografische Filme aufbelichtet werden. Auch kann die Abbildung mit Hilfe eines digitalen Printers, der durch die fotografischen Bilddaten angesteuert wird, auf Formalpapier oder Fotopapier erfolgen. Die Qualität der somit erzielten fotografischen Abbildungen ist jedoch häufig unzufriedenstellend.

Eine wesentliche Ursache hierfür liegt darin, daß die Dynamik der in der abzubildenden Bildinformation enthaltenen Luminanz auf dem Abbildungsmedium nicht umgesetzt werden kann. Dies liegt z.B. daran, daß das Fotopapier gegenüber einem fotografischen Film einen stark reduzierten Luminanz-Dynamikumfang aufweist. Aber auch der durch einen Drucker darstellbare Luminanz-Dynamikbereich ist geringer als der typische Luminanz-Dynamikumfang einer fotografischen Bildinformation.

Die oben genannten Schwächen bei der physischen Realisierung einer fotografischen Abbildung führen dazu, daß das subjektiv wahrgenommene Helligkeitsprofil bei Betrachtung der Abbildung sich von dem subjektiv wahrgenommenen Helligkeitsprofil der der Abbildung zugrundeliegenden fotografischen Bildinformation nachteilig unterscheidet. Dies bedeutet, daß das Bildempfinden eines Durchschnittsbetrachters beim Betrachten der Abbildung nicht optimal ist.

Häufig sind z.B. Helligkeitsunterschiede, die für einen Betrachter der ursprünglichen fotografischen Bildinformation noch erkennbar waren, für den Betrachter der fotografischen Abbildung nicht mehr erkennbar, wenn sich diese Helligkeitsunterschiede in einem dunklen oder sehr hellen Bereich der fotografischen Abbildung befinden.

Um diesen Nachteil zu überwinden, wurden Masken vorgeschlagen, die eine Aufhellung oder Abdunklung gewisser Bereiche der Abbildung bewirken. Derartige Masken sind z.B. in der DE 197 03 063 A1 oder der DE 40 40 498 A1 beschrieben. Darin wird eine berechnete Maske verwendet, um eine LCD-Matrix anzusteuern. Diese LCD-Matrix befindet sich bei der Aufbelichtung eines fotografischen Films auf ein Fotopapier in dem dafür erforderlichen optischen Abbildungsstrahlengang und verändert bereichsweise die Helligkeit der erstellten Abbildung. In die Berechnung der Masken fließen ausschließlich aus der ursprünglichen (fotografischen) Bildinformation gewonnene Bilddaten ein.

Nachteilig an dem bisherigen Verfahren ist, daß in der ursprünglichen fotografischen Bildinformation enthaltene fotografische Fehler, wie z.B. Farbfehler oder Fehler bei der Helligkeitsverteilung, mit in die Berechnung der Maske einfließen. Die fotografischen Fehler können z.B. durch Fehler beim Fotografieren (Unterbelichtung oder Überbelichtung), filmspezifische Eigenschaften (durch den Film bewirkte Farbverschiebungen) oder durch die spektrale Empfindlichkeit der CCDs der verwendeten Digitalkamera verursacht werden.

Fließen aber die fotografischen Fehler in die Berechnung der Matrix mit ein, so kann keine optimale Manipulation des Helligkeitsprofils bei der angestrebten fotografischen Abbildung erzielt werden.

Aufgabe der Erfindung ist es demnach, die Berechnung einer Maske zur Helligkeitsprofiländerung einer fotografischen Abbildung derartig zu optimieren, daß dabei negative Auswirkungen fotografischer Fehler unterdrückt werden.

Vorstehende Aufgabe wird durch die Gegenstände der unabhängigen Ansprüche gelöst. Vorteilhafte Weiterbildungen gehen aus den abhängigen Ansprüchen hervor.

Durch das erfindungsgemäße Verfahren wird eine Maske berechnet, die der Änderung des Helligkeitsprofils einer fotografischen Abbildung dient.

Gemäß dem Verfahren werden zuerst fotografische Bilddaten von einer fotografischen Bildinformation abgeleitet, die die abzubildende Bildinformation umfaßt, wobei bevorzugt eine (verlustbehaftete) Reduktion des Bildinformationsgehalts, insbesondere der Bildauflösung, stattfindet. Die fotografische Bildinformation kann mehr Bildinformation umfassen als abgebildet wird, z.B. kann die fotografische Bildinformation eine Sequenz von Bildern darstellen (z. B. Film mit mehreren Einzelbildern oder eine Aufnahmesequenz bei einer Digitalkamera), wobei erfindungsgemäß das Helligkeitsprofil der Abbildung eines dieser Bilder geändert wird bzw. die hierzu erforderliche Maske bestimmt wird. Die den übrigen Bildern entsprechende Bildinformation kann erfindungsgemäß bei der Bestimmung der Helligkeitsmaske verwendet werden (z.B. mittels Ganzfilmanalyse). Auch kann die Bildinformation eines ganzen Bildes verwendet werden, wenn nur ein Ausschnitt des Bildes abzubilden ist. Bei der fotografischen Bildinformation kann es sich z.B. um einen fotografischen Film (Ganzfilm, Einzelbild) handeln. Die fotografischen Bilddaten werden bevorzugt beim Ableiten aus der fotografischen Bildinformation digitalisiert und können z.B. durch Abtasten (z.B. des ganzen Films oder nur eines Einzelbildes oder eines Ausschnitts daraus) und wahlweise weiteren Verarbeitungen (wie z.B. Datenreduktion und/oder Glättung) abgeleitet werden. Die fotografische Bildinformation kann aber auch in digitaler Form vorliegen, wenn sie z.B. von einer Digitalkamera stammt oder z.B. über ein Netzwerk übertragen wird. Die fotografischen Bilddaten können dann aus diesen digitalen Daten abgeleitet werden, indem z.B. die digital vorliegende fotografische Bildinformation einfach 1:1 übernommen wird. Bevorzugt wird aber eine insbesondere verlustbehaftete Datenreduktion, insbesondere eine Auflösungsreduktion, und/oder Glättung vorgenommen, um den nachfolgenden Rechenaufwand zu minimieren.

Insgesamt wird vorgezogen, daß die Anzahl der Daten, die die abgeleiteten fotografischen Bilddaten (insbesondere pro Einzelbild) umfassen, ca. 10.000 oder kleiner, vorzugsweise kleiner als 2.000 und besonders bevorzugt, etwa 1.000 (oder weniger) beträgt. Im praktischen Einsatz lassen sich auch bei einem derartig reduzierten Datenumfang gute Ergebnisse erzielen. Gleichzeitig wird der Rechenaufwand minimiert. Insbesondere bei Gewinnung der fotografischen Bilddaten durch Abtastung einer Filmvorlage, kann von vornherein nur eine grobe Abtastung gewählt werden, so daß der für den Abtastvorgang erforderliche Zeitaufwand gegenüber einer feinen Abtastung (wie im Stand der Technik üblich) deutlich reduziert werden kann und gleichzeitig die Anzahl der fotografischen Bilddaten auf das gewünschte Maß beschränkt wird.

Die Reduktion hat weiter den Vorteil, daß feinere Details der fotografischen Bildinformation (der fotografischen Vorlage bzw. der dadurch dargestellten Szene) keinen Einfluß auf die Maskierung haben. Zu diesem Zweck kann auch die bereits erwähnte Glättung nützlich sein, wozu z.B. die während der Ableitung aus der Bildinformation auf eine gewünschte Anzahl reduzierten Bilddaten (z.B. in Form einer reduzierten Bildmatrix) einer Tiefpaßfilterung unterworfen werden. Im Falle farbiger fotografischer Bilddaten (z.B. farbige Bildmatrix) ist es von Vorteil, die Farbwerte in einen Farbraum zu transformieren, in welchem eine der Achsen die Helligkeit der Bildpunkte beschreibt. Wird die Farbinformation im weiteren Verfahren (z.B. für die Analyse) nicht weiter verwendet, so genügt es auch, aus den Farbwerten (z.B. durch gewichtete Mittelung) Grauwerte zu berechnen, welche die Helligkeit der einzelnen Bildpunkte charakterisieren. Die Reduktion und eine damit verbundene Matrizentransformation ist in der EP 0 475 897 detailliert offenbart.

Erfindungsgemäß werden die fotografischen Bilddaten, die bevorzugt in digitaler Form vorliegen, korrigiert, um so optimierte Bilddaten zu gewinnen. Bevorzugt wird nur der Teil der fotografischen Bilddaten korrigiert und in optimierte Bilddaten umgewandelt, der abzubildender Bildinformation entspricht oder einem abzubildenden Ausschnitt entspricht. Bei der Korrektur werden Fehler berücksichtigt, die bei der fotografischen Erfassung der Bildinformation entstanden sind. Dadurch werden optimierte Bilddaten erhalten, die Bilddaten zumindest angenähert sind, die von einer idealen fotografischen Bildinformation abgeleitet werden, die den fotografisch erfaßten Gegenstand fehlerfrei, das heißt der Wirklichkeit entsprechend, wiedergibt. Eine fehlerfreie Erfassung bedeutet insbesondere, daß die fotografisch erfaßte Bildinformation frei von einem Farbgang ist. Dies bedeutet, daß sich bei einer Variation der fotografisch erfaßten Lichtmenge und bei konstantem Spektrum die Farben nicht ändern, also kein "Farbgang" vorliegt. Insbesondere fotografische Filme zeigen einen Farbgang.

Eine Korrektur der fotografischen Bilddaten kann basierend auf einer Analyse einer Bildsequenz erfolgen, wie dies z.B. in EP 0 586 773 beschrieben ist. In EP 0 586 773 wird die Anlayse eines ganzen Filmes ("Ganzfilmanalyse") beschrieben. Aus dem Analyseergebnis wird z.B. der Farbgang eines Filmes abgeleitet. Das Analyseergebnis wird dann zur Korrektur der farbabhängigen Belichtung verwendet.

Wird erfindungsgemäß eine Bildsequenzanalyse (z. B. Ganzfilmanalyse) durchgeführt, um die bei der fotografischen Erfassung der Bildinformation entstandenen Fehler zu erkennen und diese berücksichtigen zu können, so werden die fotografischen Bilddaten aus einer Bildinformation abgeleitet, die mehr als ein Einzelbild umfaßt. Dann werden z.B. die Farbwerte analysiert, insbesondere statistisch analysiert. Zur Korrektur erfolgt dann in Abhängigkeit von dem Analyseergebnis eine "Farbraumnormierung" (siehe auch EP 0 586 773). Diese wird bevorzugt durch eine Translation und Rotation des Farbraumes bewirkt. Die Translation berücksichtigt dabei die mittlere Färbung und Dichte des aktuellen Films und die Rotation seinen belichtungsabhängigen Farbgang ("Kippen"). Nach der Farbraumnormierung (also dem Korrekturvorgang) sind die Bilddaten weitgehend von den filmbedingten Verzerrungen (also Fehlem bei der fotografischen Bilderfassung) befreit, so daß z.B. idealerweise dieselbe Szene, mit verschiedenen Filmen fotografiert, immer zu denselben optimierten Bilddaten führt. Eine Bildsequenzanalyse, insbesondere mit einer daraus abgeleiteten Farbraumnormierung, ist wichtig, da sich sehr viele Filmfabrikate mit teilweise erheblich unterschiedlichen Bilderfassungseigenschaften auf dem Markt befinden. Dies gilt auch für die Bilderfassungseigenschaften der verschiedenen digitalen Kameras.

Erfindungsgemäß können neben einer Bildsequenzanalyse zusätzlich oder alternativ auch andere Analyseformen gewählt werden, um die Fehler bei der Bilderfassung zu erkennen und diese dann bei der Korrektur zu berücksichtigen. Zum Beispiel kann auf gespeicherte Daten zurückgegriffen werden, die typische Bilderfassungseigenschaften verschiedener Filme oder Digitalkameras beinhalten. Die Auswahl unter den verschiedenen gespeicherten Daten kann z.B. durch Rückgriff auf Information erfolgen, die von dem Bildinformationsträger (z.B. Filmpatrone oder Diskette) neben der Bildinformation zusätzlich z.B. über den Filmtyp oder Kameratyp oder über die Aufnahmesituation (Kunstlicht oder Tageslicht) gespeichert wurde und die z. B. bei der Erfassung (Aufnahme) der fotografischen Bildinformation (z. B. beim Fotografieren) mit abgespeichert werden (z.B. Daten, die gemäß dem Advanced Photo System bzw. APS abgespeichert werden).

Hinsichtlich der Berücksichtigung filmspezifischer Daten wird nochmals auf die Druckschrift EP 0 586 773 A1 verwiesen.

Zusätzlich oder alternativ zu den obigen Analysemethoden kann eine Einzelbildanalyse durchgeführt werden. Dies bedeutet die Analyse stützt sich auf die fotografischen oder bereits optimierten Bilddaten eines Einzelbildes, die z. B. der abzubildenden Bildinformation zumindest im wesentlichen entsprechen oder die abzubildende Bildinformation als Bildausschnitt enthalten. Soll nur der Ausschnitt eines Bildes abgebildet werden (z. B. Panoramabild bei APS), so kann sich die Analyse z.B. nur auf die Bilddaten stützen, die dem Ausschnitt entsprechen, oder zusätzlich auf außerhalb des Ausschnittes gelegene Bilddaten, die aber Teil des erfaßten Einzelbildes sind. Bei den Bildmerkmalen eines Einzelbildes handelt es sich um Eigenschaften der ein Einzelbild darstellenden Bildinformation, die aus den daraus abgeleiteten fotografischen Bilddaten durch Einzelbildanalyse extrahiert werden können. Diese Bildmerkmale beschreiben insbesondere Merkmale, die das Bildempfinden (die sinnesphysiologische Wahrnehmung) besonders beeinflussen. Bei einer derartigen Analyse werden insbesondere die Färbung, der Kontrast, die Belichtung sowie Farb-, Helligkeits- und Kontrastprofile bestimmt und untersucht. Weiter erfolgt die Analyse insbesondere im Hinblick darauf, Farb- und/oder Helligkeitsfehler zu erkennen. Auch sollen "Kipperscheinungen" (farbliche Unterschiede zwischen den Lichtern und den Schatten) erkannt werden.

Vorteilhaft wird die Analyse der fotografischen Bilddaten zur Klassifizierung der Bilddaten verwendet. Das heißt, die fotografischen Bilddaten werden einer bestimmten Klasse von Bildern zugeordnet. Mögliche Bilderklassen sind z.B.: Gegenlichtbilder, Blitzlichtbilder, Kunstlichtbilder usw. Es können aber auch Klassen verwendet werden, welche sich nicht unmittelbar in fotografische Fachausdrücke umsetzen lassen, jedenfalls besteht das Ziel bei der Klassifizierung darin, Bilder mit ähnlichen Bildmerkmalen, also insbesondere bezüglich Kontrast, Belichtung, Färbung usw. zu erkennen.

Bevorzugt werden zur Klassifizierung die Einzelmerkmale zu einem N-dimensionalen Merkmalvektor zusammengefaßt. Der N-dimensionale Merkmalsraum wird (z.B. mittels eines Clustering-Verfahrens) in zusammenhängende Bereiche unterteilt, wobei jeder Bereich einer Klasse entspricht. Die Merkmalvektoren, welche in denselben Bereich fallen, stammen von Bildinformationen mit ähnlichen Bildeigenschaften und werden derselben Klasse zugeordnet.

Die Einzelbildanalyse kann z. B. basierend auf den fotografischen Bilddaten durchgeführt werden, um die fotografischen Bilddaten zu korrigieren und um optimierte Bilddaten zu erzielen oder bei deren Bestimmung z. B. in Abhängigkeit von der erfolgten Klassifizierung mitzuwirken. Bevorzugt wird die Einzelbildanalyse jedoch basierend auf den optimierten Bilddaten durchgeführt. Bevorzugt erfolgt die Korrektur der fotografischen Bilddaten und die Bestimmung der optimierten Bilddaten in diesem Fall basierend auf einer Bildsequenzanalyse oder basierend auf gespeicherten typischen Bilderfassungsdaten (oder einer Kombination daraus, siehe oben).

Die Ergebnisse der Einzelbildanalyse werden bevorzugt verwendet, um die optimierten Bilddaten zu modifizieren. Diese Modifikation erfolgt vorzugsweise in Abhängigkeit von dem Klassifikationsergebnis. Die durch die Einzelbildanalyse erfaßten Bildmerkmale bzw. das Klassifizierungsergebnis können alternativ oder zusätzlich auch in die Bestimmung der Helligkeitsmaske aus den optimierten Bilddaten einfließen und die Werte der Helligkeitsmaske somit modifzieren. Die oben genannten Modifikationen erfolgen bevorzugt basierend auf den Bildmerkmalen eines Einzelbildes, die aus den optimierten Bilddaten extrahiert werden. Sie können aber auch basierend auf anderen Merkmalen der optimierten Bilddaten erfolgen, z. B. auf Merkmalen einer Bildsequenz. Dies ist insbesondere dann von Vorteil, wenn eine Bildserie (z. B. bei Sportaufnahmen) aufgenommen wurde oder die fotografische Bildinformation z. B. mittels einer Videokamera erfaßt wurde. Auf diese Art und Weise läßt sich eine gleichmäßige Abbildungsqualität für die Bilder einer Serie erreichen.

Die Korrektur der fotografischen Bilddaten kann auf verschiedene Weisen durchgeführt werden, z. B. Pixel für Pixel oder blockweise unter Anwendung einer Korrekturfünktion. Bevorzugt wird aber eine Korrekturtransformation durchgeführt, wodurch die z. B. mittels Analyse erkannten Fehler bei der Bilderfassung berücksichtigt bzw. zumindest annähernd ausgeglichen werden.

Bei dieser Korrekturtransformation wird bevorzugt eine Translation und eine Rotation des Farbraumes durchgeführt. Durch die Korrekturtransformation, die auf die fotografischen Bilddaten angewendet wird, werden optimierte Bilddaten erhalten. Wird eine Abbildung aufgrund derartig optimierter Bilddaten erzeugt, so ist diese im Vergleich zu einer Abbildung auf der Basis der fotografischen Bilddaten für einen Betrachter ästhetisch ansprechender. Die optimierten Bilddaten haben somit optimierte Bildempfindungseigenschaften. Insbesondere sind störende Fehler hinsichtlich Kontrast, Belichtung und/oder Färbung reduziert. Die Korrekturtransformation oder eine Korrekturfunktion läßt sich z. B. in Hinblick auf diese Fehler in einem schrittweisen, insbesondere iterativen Prozeß bestehend aus Abbildung, Analyse der Abbildung, Modifikation der Korrekturtransformation, erneute Abbildung usw. optimieren.

Erfindungsgemäß ist bevorzugt die Anzahl der der Maskenberechnung zugrunde gelegten optimierten Bilddaten gegenüber den eventuell einer fotografischen Abbildung mit einem digitalen Printer zugrunde gelegten optimierten Bilddaten deutlich reduziert. Die ersteren optimierten Bilddaten können aus den letzteren optimierten Bilddaten z. B. durch Auflösungsreduktion gewonnen werden. Bevorzugt werden jedoch erfindungsgemäß die optimierten Daten für die Maskenberechnung in diesem Fall aus einer bereits stark reduzierten Datenanzahl gewonnen.

Basierend auf den optimierten Bilddaten (für die Maskenberechnung), die von fotografischen Fehlem befreit sind oder bei denen zumindest die fotografischen Fehler minimiert wurden, wird dann eine sog. Helligkeitsmaske erzeugt. Diese Helligkeitsmaske enthält Werte, mit denen das Helligkeitsprofil (die Helligkeitsverteilung) einer fotografischen Abbildung der (ursprünglichen) fotografischen Bildinformation (z.B. Film) beeinflußt werden soll.

Die so erhaltene Matrix kann z.B. gespeichert werden oder zur Weiterverarbeitung zu einer Einrichtung (z.B. optischer oder digitaler Printer) übertragen werden, die eine Abbildung der fotografischen Bildinformation bewirkt.

Ist die fotografische Bildinformation in physischer Form, z.B. als fotografischer Film vorhanden, so können die Werte der Helligkeitsmaske bei der Ansteuerung einer Lichtdichte-Steuereinrichtung, wie z.B. einer LCD-Matrix, verwendet werden. Insbesondere können sie zur Ansteuerung der LCD-Einrichtung verwendet werden, die in der europäischen Patentanmeldung mit der Anmelde-Nr. 98 115 693.8 beschrieben ist, deren Offenbarung hiermit aufgenommen wird und die in Kopie in der Anlage beigefügt wird.

Die Werte der Helligkeitsmaske werden, wie bereits erwähnt, aus den optimierten Bilddaten bestimmt. Vorzugsweise geht man dazu so vor, daß aus den optimierten Bilddaten zuerst die diesen Bilddaten entsprechenden Grauwerte bestimmt werden und dann aus diesen Grauwerten die Werte für die Helligkeitsmaske bestimmt werden.

Die durch das erfindungsgemäße Verfahren verarbeiteten Daten werden vorzugsweise in Matrizenform dargestellt und durch Transformation der Matrizen verarbeitet. Dementsprechend wird die Helligkeitsmaske ebenfalls vorzugsweise als Matrix dargestellt.

Die Werte der Helligkeitsmaske werden vorzugsweise so bestimmt, daß bei Anwendung eines Bereichs der Maske sich Auswirkungen auf das Helligkeitsprofil (die Helligkeitsverteilung) der fotografischen Abbildung desjenigen Bereichs der fotografischen Bildinformation ergeben, der auch in die Berechnung des Maskenbereichs mit eingeflossen ist. Insbesondere sollen Bereiche in der Abbildung mit mittlerer Helligkeit nicht oder nur unwesentlich beeinflußt werden. Weiter sollen Bereiche niedriger Helligkeit aufgehellt werden (oder unbeeinflußt bleiben) und/oder Bereiche hoher Helligkeit abgedunkelt werden (oder unbeeinflußt bleiben). Gemäß einem bevorzugten Verfahren wird das Aufhellen dunkler Bereiche vom Grad der Dunkelheit so abhängig gemacht, daß die Aufhellung in sehr dunklen Bereichen wieder abgeschwächt wird oder nicht mehr durchgeführt wird. Entsprechend wird vorzugsweise die Abdunklung heller Bereiche so bewirkt, daß in sehr hellen Bereichen die Abdunklung abgeschwächt oder sogar völlig unterlassen wird.

Bei der eben beschriebenen beispielhaften Ausgestaltung der Helligkeitsmaske erfolgt also die Änderung des Helligkeitsprofils in Abhängigkeit von der Helligkeit der abzubildenden Bilddaten. Genauer werden gemäß der vorliegenden Erfindung die Elemente der Helligkeitsmaske aus den optimierten Bilddaten und insbesondere aus den entsprechenden Grauwerten der optimierten Bilddaten berechnet. Die berechneten Werte sind vorzugsweise eine Funktion der optimierten Bilddaten bzw. der entsprechenden Grauwerte. Die Funktion ist vorzugsweise nichtlinear. Die Funktion kann z.B. in Form einer Tabelle vorliegen oder sie kann als programmierte, stückweise lineare Funktion realisiert werden.

Die Funktion wird vorzugsweise so gestaltet, daß sie die oben beschriebene Auswirkung auf das Helligkeitsprofil der fotografischen Abbildung hat, also z.B. Aufhellung dunkler Bereiche und Abdunklung heller Bereiche. Das Ausmaß der Aufhellung bzw. Abdunklung wird dabei vorzugsweise so begrenzt, daß bei der Darstellung bzw. Wiedergabe des Bildes keine sichtbare oder störende Einbuße im Gesamtkontrast erfolgt. Vorzugsweise gehen deshalb bei der Gestaltung der Funktion bzw. Berechnung der Maskenelemente die bereits gewonnenen Analysenergebnisse bzw. insbesondere Informationen über den Kontrast in Bereichen des Bildes und/oder über den Gesamtkontrast ein. Diese Informationen werden z.B. bereits durch die oben beschriebene Analyse erfaßt, die die Charakteristiken der fotografischen Bilddaten bestimmt. Es kann aber auch zusätzlich oder alternativ eine gesonderte Analyse der optimierten Bilddaten erfolgen, aus der dann Charakteristiken der optimierten Bilddaten abgeleitet werden, die dann in die Berechnung der Maskenelemente einfließen.

Weiter wird das Ausmaß der Aufhellung bzw. Abdunklung vorzugsweise so begrenzt, daß die Sichtbarkeit des Rauschens z.B. die Körnigkeit, falls es sich bei der fotografischen Bildinformation um einen Negativfilm handelt, in den dunklen und/oder hellen Partien des Bildes nicht übermäßig gesteigert wird. Um das Maß der Begrenzung der Aufhellung bzw. Abdunklung zu bestimmen, kann wiederum auf Charakteristiken zurückgegriffen werden, die bei der Analyse der fotografischen Bilddaten oder bei einer gesonderten Analyse der optimierten Bilddaten erfaßt wurden (z. B. überbelichtet, unterbelichtet, etc.). Weiter können bei der Bestimmung der Funktion Informationen über den Filmtyp (z.B. ASA-Zahl hinsichtlich der Körnigkeit) oder die Aufnahmesituation (z.B. mit Blitz aufgenommen) einfließen.

Bei der Realisierung einer Funktion kann die Begrenzung der Aufhellung bzw. Abdunklung z.B. so erfolgen, daß ein Maximalwert festgelegt wird. Dieser Maximalwert kann wiederum eine Funktion der bestimmten Charakteristiken der fotografischen Bildinformation (z.B. Filmtyp) oder der bestimmten Charakteristiken der fotografischen Bilddaten oder der optimierten Bilddaten (z.B. Gesamtkontrast) sein.

Die Funktion wird vorzugsweise so gestaltet, daß keine Verfälschung durch bildfremde Helligkeitssprünge beim Maskieren auftritt. Dies bedeutet, daß die zuverwendende Funktion vorzugsweise stetig ist und die Steilheit der Funktion nicht zu groß sein darf. Zu diesem Zweck kann es auch nützlich sein, die Helligkeitsmaske einer Glättung zu unterwerfen bzw. die der Helligkeitsmaske zugrundeliegende Matrix einer Tiefpaßfilterung zu unterwerfen.

Wie bereits oben erwähnt, können durch die Analyse der Bilddaten bestimmte Charakteristiken oder auch anderweitig erfaßte Charakteristiken bzw. Informationen (z.B. zusätzlich zur Bildinformation bei der Bilderfassung abgespeicherte Daten, insbesondere über die Aufnahmesituation, oder z.B. Kameratyp einer Digitalkamera oder Filmtyp) in die Bestimmung einer am besten geeigneten Funktion einfließen. Vorteilhaft ist dabei die verschiedenen Charakteristiken je nach Grad ihrer Ausprägung verschiedenen Klassen zuzuordnen. Jeder Klasse ist dann wiederum eine am besten geeignete Funktion zugeordnet. Die Klassenausbildung und die Funktionsgestaltung für jede Klasse kann dann mit zunehmendem Erfahrungsschatz z.B. mittels eines Expertensystems verfeinert werden.

Neben der Berücksichtigung globaler Eigenschaften, die in den Bildklassen zum Ausdruck kommen, ist es auch vorteilhaft, lokale Eigenschaften in der Umgebung eines Maskierungspunktes zu berücksichtigen. Hierzu erfolgt, wie weiter unten beschrieben wird, bevorzugt eine lokale Steuerung der Maskierungsstärke.

Eine lokale Steuerung der Maskierungsstärke ist z.B. deswegen erforderlich, weil es bei der Überlagerung einer Helligkeitsmaske mit der für die Abbildung verwendeten Bildinformation zu störenden Effekten kommen kann. Dies gilt insbesondere dort, wo das Helligkeitsprofil der abzubildenden Bildinformation starke Sprünge macht. Wird z. B. eine Helligkeitsstufe mit steiler Stufenflanke der abzubildenden Bildinformation mit einer inversen Helligkeitsstufe mit flacher Stufenflanke der Maske überlagert, so kommt es bei der fotografischen Abbildung zu einer Kantenüberhöhung sowohl in positiver als auch in negativer Richtung. Dies bedeutet, daß beim Stufenübergang von Dunkel nach Hell zuerst ein normaler dunkler Wert vorliegt, der dann kurz vor der Stufe sich weiter verdunkelt und sich dann unmittelbar nach der Stufe stark aufhellt. Die starke Aufhellung schwächt sich dann kurz darauf wieder auf einen normalen hellen Wert ab. Aufgrund des niedrigen Dynamikumfangs des Fotopapiers ist die verstärkte Abdunklung im Gegensatz zur verstärkten Aufhellung üblicherweise nicht sichtbar. Aus diesem Grunde werden vorzugsweise sichtbare Kantenüberhöhungseffekte in solche Bereiche verlagert, in denen eine Kantenüberhöhung für einen Betrachter nicht auffällig ist. Im oben beschriebenen Falle würde eine Maske so gestaltet werden, daß nur im dunklen Bereich eine Kantenüberhöhung (wenn auch stärker) auftritt und im hellen Bereich keine Kantenüberhöhung auftritt. Dazu wird die Position der Stufenflanke der Helligkeitsmaske in Richtung zu dem dunkleren Bereich der abzubildenden Helligkeitsstufe soweit geändert, bis sie völlig in dem dunklen Bereich liegt.

Um unerwünschte Effekte bei der Überlagerung, wie sie z.B. oben beschrieben sind, zu vermeiden, wird die Maskierungsstärke lokal aufgelöst gesteuert, indem vorzugsweise die Werte der Elemente der Helligkeitsmaske geändert werden. Die Steuerung erfolgt dabei vorzugsweise so, daß die Werte in einem lokalen Steuerungsbereich der ein aktuelles Maskenelement und weitere Maskenelemente enthält, einer Berechnung zugrunde gelegt werden, aus der ein neuer Wert für das aktuelle Maskenelement hervorgeht.

Bei der Berechnung für die lokale Steuerung können unterschiedliche Kennwerte oder Funktionen verwendet werden, deren Ergebnis z.B. gewichtet miteinander kombiniert werden kann. Als Funktionen können z.B. die Maximalwertbestimmung, die Minimalwertbestimmung, die Mittelwertbestimmung, die Medianbestimmung verwendet werden, die dann bevorzugt auf die Werte in dem erwähnten Manipulationsbereich angewendet werden. Es kann aber auch eine Funktion zur Bestimmung der Standardabweichung, des Detailkontrasts usw. verwendet werden. Verwendet man z.B. lediglich eine Minimalfunktion, so bewirkt dies eine "vorsichtige" Maskierung der Bereiche mit höheren Maskenwerten, was der oben beispielhaft beschriebenen Flankenverschiebung gleichkommt. Erfindungsgemäß fließen auch bei der Manipulation der Werte der Helligkeitsmaske Charakteristiken der Bilderfassung (z.B. Filmtyp, ASA-Zahl usw.) und/oder bestimmte Charakteristiken der fotografischen Bilddaten und/oder der optimalen Bilddaten in die Bestimmung der Art der Manipulation bzw. bei Festlegung der oben erwähnten Gewichtung mit ein. Auch kann in diesem Fall wieder klassifiziert werden oder auf eine bereits erfolgte Klassifizierung zurückgegriffen werden. Wie bereits oben erwähnt, können bei der Bestimmung eines neuen Maskenwertes die Manipulationsfunktionen (Maximumfunktion, Minimumfunktion usw.) unterschiedlich gewichtet werden. Die Ausgestaltung der Gewichte kann dabei z.B. von der bestimmten Klasse abhängig gemacht werden.

Die Manipulation und damit z.B. die Ausgestaltung der Gewichte kann aber auch von den Eigenschaften (Merkmalen) der verschiedenen lokalen Bereiche eines Einzelbildes abhängig gemacht werden. Anders ausgedrückt, Werte der Helligkeitsmaske, die Bereiche der Abbildung mit unterschiedlichen Merkmalen bzw. Eigenschaften betreffen, werden unterschiedlich manipuliert. Eine Eigenschaft eines Bereichs stellt z.B. dessen Informationsgehalt ("Energiedichte") dar. So weisen z.B. informationsreiche Bildbereiche typischerweise starke Hell/Dunkel-Schwankungen auf. Bevorzugt wird die Manipulation so durchgeführt, daß informationsarme Bildbereiche gar nicht maskiert werden oder weniger stark maskiert werden, als informationsreiche Bildbereiche. Bildbereiche mit unterschiedlichen Eigenschaften bzw. Merkmalen werden z.B. mittels einer "lokalen Analyse" erkannt, mit der lokal aufgelöste Bereiche eines Bildes analysiert werden. Diese lokale Analyse beruht z.B. auf einer örtlich aufgelösten Hell/Dunkel-Analyse, Analyse der Hell/Dunkel-Schwankungen bzw. der Kontrast-Schwankungen. Die Manipulation erfolgt bevorzugt lokal unterschiedlich in Abhängigkeit von den lokalen Eigenschaften bzw. Merkmalen des Bildes, insbesondere wird ein Wert einer Helligkeitsmaske in Abhängigkeit von den Merkmalen (Bildmerkmalen) eines dem Wert lokal zugeordneten Bildbereichs manipuliert.

Die lokale Analyse/Manipulation kann auf einer Analyse/Manipulation der fotografischen Bilddaten, optimierten Bilddaten oder den Werten der Helligkeitsmaske selbst beruhen. Insbesondere im letzteren Fall ist die Analyse bevorzugt integrierter Bestandteil der Berechnung einer manipulierten (modifizierten) Helligkeitsmaske (siehe weiter unten z.B. die Verwendung der Standardabweichungsfunktion). Die lokale Manipulation (Modifikation) erfolgt bevorzugt so, daß die Beeinflussung des Helligkeitsprofils lokal aufgelöst "dosiert" bzw. variiert wird, so daß lokal aufgelöst eine mehr oder weniger starke Beeinflussung des Helligkeitsprofils erfolgt, und zwar in Abhängigkeit von den lokal zugeordneten Bildmerkmalen (Merkmalen des lokal zugeordneten Bildbereichs).

Für die Überlagerung der Helligkeitsmaske mit der abzubildenden Bildinformation kann es wünschenswert sein, daß die Maske eine vorgegebene Anzahl von Elementen hat. Liegt die Maske in Matrizenform vor, so kann die Matrix z.B. reduziert oder aufgeweitet werden, um eine Anpassung an die gewünschte Anzahl bzw. an eine gewünschte Anzahl von Zeilen und Spalten zu erreichen.

Eine Anpassung an eine vorgegebene Anzahl ist insbesondere dann vorteilhaft, wenn mit den Maskenwerten eine Lichtsteuereinrichtung, wie z.B. eine LCD-Matrix, bei der Aufbelichtung eines Filmes auf ein Fotopapier eingesetzt wird. Eine derartige LCD-Matrix hat eine vorgegebene Anzahl von Elementen.

Vorzugsweise wird in dem Fall, in dem die Anzahl der Maskenelemente anzupassen ist, die Bestimmung der Helligkeitsmaske in zwei Stufen durchgeführt. Zuerst wird eine erste Maske berechnet, die eine Aufhellung und Abdunklung bewirken soll. Diese Maske ist vorzugsweise eine Matrix mit denselben Dimensionen wie eine Matrix, in der die optimierten Bilddaten dargestellt sind. Aus der ersten Maske wird dann eine zweite Maske mit der passenden Elementzahl und mit der gewünschten Anzahl an Zeilen und Spalten bestimmt. Die zweite Maske wird dabei vorzugsweise als eine Matrix mit Dimensionen dargestellt, die mit den gewünschten Dimensionen, also z.B. mit der Anzahl an Zeilen und Spalten einer Flüssigkeitsmatrix übereinstimmt.

Bei der Bestimmung der zweiten Maske findet eine Zuordnung statt. Dabei werden Elemente der ersten Maske Elementen der zweiten Maske zugeordnet. Erfindungsgemäß wird diese Zuordnung mit der oben erwähnten Manipulation der Werte der ersten Maske kombiniert. Betrachtet man z.B. ein aktuelles Element der ersten Maske, das in einem zugeordneten Bereich liegt, so werden die Werte der Elemente in diesem Bereich der Manipulation des Wertes des aktuellen Elements zugrundegelegt und der sich aus der Manipulation ergebende Wert dem Element der zweiten Maske zugewiesen, das dem aktuellen Element der ersten Maske zugeordnet ist.

Werden, wie oben ausgeführt, die lokalen Eigenschaften bzw. Merkmale eines Bildes analysiert und erfolgt die Manipulation je nach den lokalen Eigenschaften lokal unterschiedlich, so werden bevorzugt bei der Berechnung eines jeden Elements der zweiten Maske die lokalen Eigenschaften bzw. Merkmale einer diesem Element zugeordneten Umgebung der ersten Maske berücksichtigt. Dies gilt insbesondere dann, wenn sowohl die erste Maske als auch die zweite Maske in Matrizenform dargestellt wird.

Im Falle einer optischen Maskierung wird eine optische Maske (z.B. eine Flüssigkristallmatrix bzw. Lichtsteuereinrichtung) mit den Werten der vorzugsweise in zwei Stufen (erste Maske und zweite Maske) berechneten Helligkeitsmaske angesteuert. Die optische Maske wird dabei vorzugsweise in einem gewissen Abstand zur Vorlagenebene angeordnet, so daß sich eine unscharfe Abbildung der Maske (unscharfe Überlagerung) ergibt. Die Dimensionen der Helligkeitsmaske werden vorzugsweise gleich oder zumindest in etwa gleich der Anzahl der Zeilen und Kolonnen der optischen Maskenmatrix gewählt.

Bei den verschiedenen Schritten der Berechnung der Helligkeitsmaske wird bevorzugt darauf geachtet, daß die geometrische Zuordnung der einzelnen Matrixpunkte bzw. Maskenpunkte aufrechterhalten bleibt. Dies bedeutet insbesondere, daß benachbarte Maskenwerte eines Maskenwertes auf benachbarte Bereiche der dem Maskenwert zugrundeliegenden fotografischen Bildinformation (unter Aufrechterhaltung der Orientierung) zurückzuführen sind, so daß sich die Helligkeitsmaske und abzubildende Bildinformation im optischen System richtig überlagern.

Allgemein gilt, daß die abzubildende Bildinformation gleich der fotografischen Bildinformation sein kann oder aus dieser durch eine Verarbeitung hervorgeht. In einem optischen System kann die Verarbeitung z.B. erfolgen, indem z.B. die Belichtung durch Farbfilter manipuliert werden, so daß sich die (ursprüngliche) fotografische Bildinformation (Information des fotografischen Films) nach der Filterung von der abzubildenden Filminformation unterscheidet, die dann mit der Maske überlagert wird.

Entsprechendes gilt auch für den Fall einer rechnerischen Überlagerung. Dort liegt häufig die fotografische Bildinformation in hoher Auflösung digital vor. Diese digitale Bildinformation wird, wie bereits erwähnt, bei dem erfindungsgemäßen Verfahren zur Bestimmung der Helligkeitsmaske in einem ersten Schritt (Ableitung der fotografischen Bilddaten) vorzugsweise reduziert. Zur Bestimmung der abzubildenden Bildinformation erfolgt jedoch vorzugsweise keine oder nur eine geringe Reduktion. Vorzugsweise erfolgt aber als Verarbeitungsschritt eine Korrekturtransformation (siehe EP 0 586 773 A1). Die nach der Korrekturtransformation erhaltene Bildinformation ist dann die abzubildende Bildinformation, die mit der Helligkeitsmaske (rechnerisch) zu überlagern ist.

Die rechnerische Maskierung erfolgt vorzugsweise digital bzw. elektronisch. Dabei wird die Helligkeitsmaske (beim zweistufigen Verfahren die zweite Maske) mittels eines der bekannten Interpolationsverfahren (z.B. "image resampling", "image resizing", "upsampling" ...) in einem Bild mit der Auflösung der abzubildenden Bildinformation transformiert, vorzugsweise mittels Tiefpaßfilterung (vorzugsweise während oder im Anschluß an die Interpolation) geglättet und anschließend rechnerisch der ursprünglichen Bildmatrix überlagert. Für die rechnerische Überlagerung wird eine vorgegebene Verknüpfungsfunktion gewählt, z.B. einfache Addition. Falls die erwähnte Glättung durchgeführt wird, entspricht dieser Vorgang der unscharfen Abbildung im Falle der optischen Maskierung.

Wie oben erwähnt, wird die Helligkeitsmaske bevorzugt aus den Grauwerten abgeleitet, die wiederum aus den optimierten Bilddaten bestimmt werden. Die Helligkeitsmaske kann aber auch jeweils getrennt für die Verarbeitung verschiedenfarbiger abzubildender Bildinformation (z.B. für die Rot-, Grün- und Blau-Belichtung) berechnet werden. Dabei werden bevorzugt die Helligkeitswerte der optimierten Bilddaten, die einer bestimmten Farbe zugeordnet sind, zur Berechnung der für die entsprechende Farbe bestimmten Helligkeitsmatrix verwendet. Auch kann, falls nur eine Maske verwendet wird, die in den optimierten Bilddaten enthaltene Farbinformation berücksichtigt werden.

Im folgenden werden beispielhafte Ausführungsformen der vorliegenden Erfindung erläutert. Dabei werden weitere vorteilhafte Merkmale offenbart. Verschiedene Merkmale unterschiedlicher Ausführungsformen können miteinander kombiniert werden.

Fig. 1a zeigt einen Aufbau einer Belichtungsvorrichtung mit einer Lichtdichte-Steuereinrichtung, die mit den Werten der erfindungsgemäßen Helligkeitsmatrix angesteuert wird, in einer schematischen Schnittsicht;
Fig. 1b zeigt die optischen Längen bei der Abbildung;
Fig. 2 zeigt beispielhafte Funktionen zur Maskenberechnung;
Fig. 3 zeigt schematisch geometrische Transformationen, die zur Maskenberechnung durchgeführt werden;
Fig. 4 zeigt einen beispielhaften Zuordnungsvorgang bei einem Übergang von der ersten Maske zu der zweiten Maske;
Fig. 5 zeigt ein Signal- und Datenflußdiagramm bei einem optischen Printer;
Fig. 6 zeigt ein Daten- und Signalflußdiagramm in einem digitalen Printer.

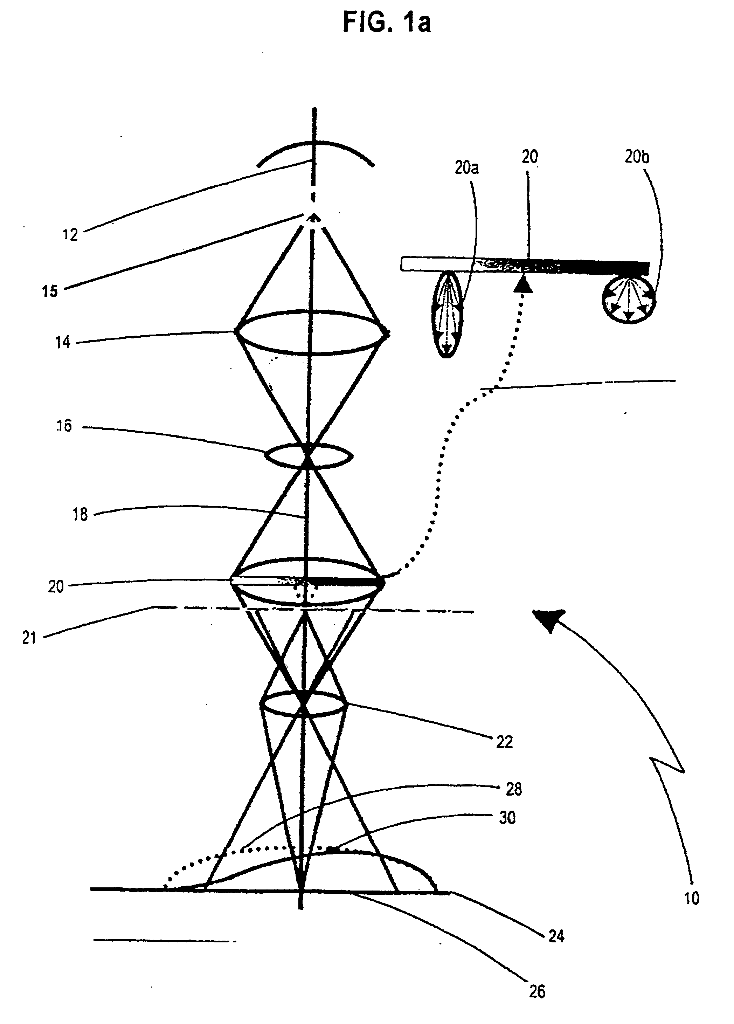

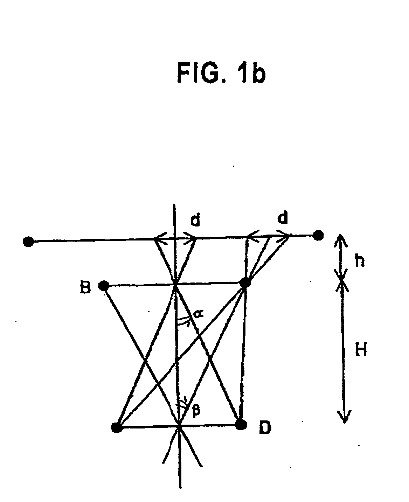

In Fig. 1 wird eine Belichtungsvorrichtung 10 allgemein dargestellt, die eine LCD-Einrichtung 20 enthält, die mit den Werten der Helligkeitsmatrix angesteuert wird. Nicht eingezeichnet sind die optischen Einrichtungen (Filter), welche dazu dienen, die Belichtung in den drei Farben Rot, Grün und Blau zu steuern.

Die Flüssigkristallmatrix befindet sich in einem geeigneten Abstand zur Filmebene.

Ausgehend von einer Lichtquelle 12 wird ein Lichtstrahl über eine optische Anordnung 14, 16 entlang einer optischen Achse 18 durch ein Materialband von Negativen 21 hindurchgestrahlt. Vor dem Negativ 21 ist die LCD-Einrichtung 20 mit Merkmalen gemäß der Erfindung angeordnet.

Die rechts oben vergrößert in Fig. 1 hervorgehobene LCD-Einrichtung 20 weist abgedunkelte Bereiche 20b auf, die zu einer größeren Lichtstreuung führen, so daß in diesem Bereich weniger Licht vom Objektiv 22 erfaßt wird. Umgekehrt sind Bereiche 20a vorhanden, die nur wenig oder gar nicht bzw. nur über eine kurze Zeit oder gar nicht abgedunkelt sind. Dementsprechend kann die gegenüberliegende Seite 20b der LCD-Einrichtung 20 über längere Zeit abgedunkelt sein.

Das die LCD-Einrichtung 20 passierende Licht durchleuchtet anschließend das Negativ 21 und wird durch die Optik 22 auf ein Papierfoto 26 eines Bandes 24 mit fotoempfindlichem Material abgebildet. Hier zeigt die Kurve 28 über dem Abzug 26 an, wie die Lichtintensität über dem Abzug 26 verläuft, wenn die LCD-Einrichtung 20 nicht streuend ist. Die durchgezogene Linie 30 zeigt an, wie der Intensitätsverlauf des Lichtes ist, wenn die LCD-Einrichtung, wie in Fig. 1 rechts oben dargestellt, asymmetrisch streuend betrieben wird. Dementsprechend ist die Kurve 30 entsprechend der Hell-Dunkel-Abstufung der LCD-Einrichtung 20 oberhalb der Materialbahn 24 bzw. oberhalb des zu belichtenden Abzugs 26 asymmetrisch bzw. einseitig verzerrt.

In der Fig. 1 sind die bei der Belichtung auftretenden optischen Längen schematisch dargestellt. Dabei gelten die folgenden Beziehungen:

$\dfrac{D}{2H}$ = tg $\alpha$ numerische Apertur = 0,07 ($\alpha \approx 4°$)

$\dfrac{B}{2H}$ = tg $\beta$ numerische Bildapertur

$\dfrac{h}{H} = \dfrac{d}{D}$ Defokusierung

$$\frac{d}{B} = \frac{h\ tg\ \alpha}{H\ tg\ \beta} \qquad \text{Unschärfe} (\approx 0,1)$$

Die Flüssigkristallmatrix befindet sich in einem geeigneten Abstand h zu der Filmebene, zwischen der Pupille des in der Fig. 1a gezeigten Objektivs 22 und dem Flüssigkristall besteht ein Abstand H.

Eine Flüssigkristallmatrix kann z.B. aus 20 x 30 Zellen bestehen. Die Randelemente der Matrix sind vorteilhaft nach außen verbreitert, um Ungenauigkeiten in der Positionierung und eine gewisse Variabilität der optischen Vergrößerung aufzufangen sowie um optische Randeffekte zu vermeiden. Die aktive Fläche der Matrix beträgt z.B. 33 mm x 48 mm. Der Abstand h zwischen Flüssigkristall und Filmebene ist so gewählt, daß bei exakter Positionierung, bei der wichtigsten Vergrößerung und z.B. im Fall eines 35 mm Negativs (Vollformat, nominelle Dimension des Negativs 24 mm x 36 mm) der zentrale 30 mm x 45 mm große Bereichs des Flüssigkristalls (20 x 30 quadratische Zellen) als optische Maske wirksam wird. Dieser Abstand gewährleistet die notwendige Unschärfe der Maskenabbildung auf Fotopapier.

Ein Printer, der das erfindungsgemäße Prinzip der Maskenberechnung verwendet, ist z.B. mit zwei Scannern ausgerüstet, einem Farbscanner mit z.B. einer Auflösung von 26 x 39 und einem Dichtescanner mit z.B. einer Auflösung von 260 x 390 Bildpunkten, wobei die Auflösung jeweils pro zu verarbeitender fotografischer Bildinformation (z.B. pro Einzelfilm-Negativ) gilt. Beide Scanner messen vorzugsweise das Negativbild über seine ganze Bildfläche (24 mm x 36 mm) auf einem homogenen Raster ($\Delta x = \Delta y$) aus.

Grundsätzlich können sowohl die Bildmatrizen, die durch den Farbscanner gewonnen wurden, als auch die Bildmatrizen, die durch den Dichtescanner gewonnen wurden, als Ausgangspunkt für die Maskenberechnung und somit als fotografische Bilddaten dienen. Die Bildmatrizen des Farbscanners liegen bereits in einer hinreichend niedrigen Auflösung vor, so daß auf eine Reduktion der digitalisiert vorliegenden Bildinformation verzichtet werden kann und die zu erhaltene digitale Bildinformation direkt als fotografische Bilddaten in die Berechnung der Maske einfließen kann.

Verwendet man die Bildmatrizen des Dichtescanners, so erhöht sich zwar einerseits der Rechenaufwand für die Maskenberechnung, andererseits besteht mehr Freiheit in der Wahl der Dimensionen ($M_2 x N_2$) der als Matrix dargestellten fotografischen Bilddaten. Liegt z.B. die Information, die von dem Dichtescanner erhalten wird, als $M_1 x N_1$-Matrix vor, so kann auf eine reduzierte Matrix durch eine Reduktionstransformation mit den Dimensionen $M_2 x N_2$ übergegangen werden. Diese reduzierte Matrix enthält dann die fotografischen Bilddaten, die der weiteren Verarbeitung zur Maskenberechnung zugrundegelegt werden.

Bei einer bevorzugten Ausführungsform werden die fotografischen Bilddaten durch die unreduzierte Bildmatrix des Farbscanners gebildet, da diese gleichzeitig die Grundlage für eine Ganzfilm- und Einzelbildanalyse bildet, wie dies z.B. in der oben erwähnten EP 0 586 773 offenbart ist.

Wie bereits erwähnt, werden die somit erzielten fotografischen Bilddaten einer Korrekturtransformation unterzogen, um so die optimierten Bilddaten zu erhalten. Aus diesen werden dann bevorzugt Grauwerte bestimmt.

In dem Falle einer farbigen fotografischen Bildinformation (farbige Bildmatrix) werden bevorzugt die Farbwerte in einen Farbraum transformiert, in welchem eine der Achsen die Helligkeit der Bildpunkte beschreibt, um die aus der fotografischen Bildinformation abzuleitenden fotografischen Bilddaten zu erhalten. Wird die Farbinformation nicht weiter verwendet (z.B. für die Analyse), so genügt es auch, aus den Farbwerten (z.B. durch gewichtete Mittelung) Grauwerte zu berechnen, welche die Helligkeit der einzelnen Bildpunkte charakterisieren.

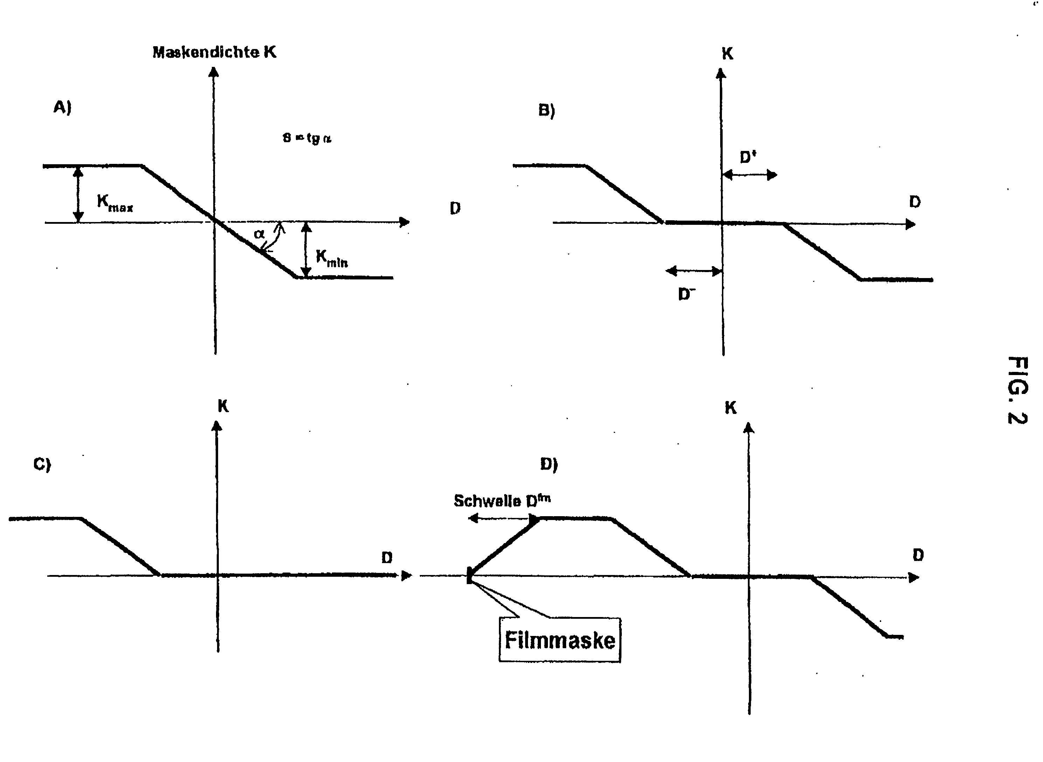

Fig. 2 zeigt mögliche Funktionen für die Umrechnung der Grauwerte in Werte für eine erste Maskenmatrix. Aus der ersten Matrix wird dann in einem späteren Schritt eine zweite Maskenmatrix gebildet, die dann gleich der Helligkeitsmaske ist, die der abzubildenden Filminformation überlagert wird.

In Fig. 2 ist auf der Abszisse die Helligkeit D der Grauwerte der optimierten Bilddaten (im folgenden als "optimierte Grauwerte" bezeichnet) aufgetragen. Da helle Punkte in der angestrebten fotografischen Abbildung hohen Dichten des Negativs entsprechen, kann D als eine normierte (korrigierte) Filmdichte bzw. Negativdichte aufgefaßt werden. In der gewählten Darstellung entspricht der (korrigierte bzw. optimierte) Wert D = 0 einer "normalen" oder "mittleren" Helligkeit in der fotografischen Abbildung (wenn keine Maskierung erfolgt), während positive Werte von D helleren Bereichen und negative Werte von D dunkleren Bereichen in der fotografischen Abbildung entsprechen (wenn keine Maskierung erfolgt). Die Ordinate hingegen stellt die "optische Dichte" K der Maske dar. Positive Werte von K bewirken in der fotografischen Abbildung eine Aufhellung, negative Werte eine Verdunkelung gegenüber einem unmaskierten Abbildungsvorgang. Bei der physikalischen Realisierung der optischen Maske wird vorzugsweise eine passive Maske anstatt einer aktiven Maske (z.B. LED-Matrix) eingesetzt. Die Abdunklung der Lichter (negativer Ast der Kennlinien in Fig. 2) muß in diesem Fall bei einem Negativfilm durch längere/intensivere Belichtung erreicht werden.

Die Kennlinie in Fig. 2a entspricht der konventionellen unscharfen Maskierung, wobei zusätzlich eine Begrenzung der Maske nach oben und unten stattfindet. Die Stärke der Maskierung wird über die Steilheit S der Kennlinie und die Grenzwerte $K_{max}$, $K_{min}$ der Maskendichte beeinflußt. Im allgemeinen ist es von Vorteil, die Maskierung nur auf die ausgeprägten Schatten und Lichter im Bilde anzuwenden; eine entsprechende Kennlinie ist in Fig. 2b dargestellt. Ein Maskierung erfolgt nur, falls die normierte Filmdichte den Wert $D^+$ überschreitet oder den Wert $D^-$ unterschreitet.

Man kann sich auch damit begnügen, die Schatten aufzuhellen und die Lichter unverändert zu belassen, was mit einer Kennlinie entsprechend Fig. 2c erreicht werden kann. Der Vorteil dieser Wahl besteht darin, daß die Maskierung keine Erhöhung der Belichtungszeiten (und damit keine Reduktion des Printerdurchsatzes) zur Folge hat.

Aus ästhetischen Gründen sollten Schattenbereiche, welche kaum Bildinformation enthalten, nicht oder nur geringfügig maskiert werden. Dies wird mit der Kennlinie von Fig. 2d dadurch erreicht, daß die Maskierung ab einer wählbaren Schwelle $D^{fm}$ mit zunehmender Annäherung der Negativdichte an die Filmmaske abgeschwächt wird.

Es gibt eine Reihe von Aufnahmekategorien, bei welchen sich eine Maskierung nachteilig auswirken kann. Beispiele sind Nachtaufnahmen und Sonnenuntergänge, bei denen die maximale Dichte auf Fotopapier auf keinen Fall reduziert werden sollte. Dies kann mit der Kennlinie von Fig. 2d teilweise erreicht werden. Bevorzugt wird jedoch, solche Bilder von einer Maskierung ganz auszuschließen. Zu diesem Zweck kann die Tatsache genutzt werden, daß die Bildanalyse eine Klassifizierung der fotografischen Bildinformation (Negative) entsprechend ihrem Bildinhalt liefert. Nachtaufnahmen und Sonnenuntergänge häufen sich dabei in bestimmten Klassen, welche damit von einer Maskierung ausgeschlossen werden können. Allgemeiner ist es auch möglich, die Stärke der Maskierung über die verschiedenen in Fig. 2 dargestellten Kennlinienparameter ($S$, $K_{max}$, $K_{min}$, $D^+$, $D^-$, $D^{fm}$) individuell für jede der Bildklassen zu optimieren.

Erfindungsgemäß kann jedenfalls in Abhängigkeit von dem Charakter der fotografischen Bildinformation bzw. der fotografischen Bilddaten und/oder der Bilderfassung (z.B. Filmtyp, abgespeicherte Informationen über die Bilderfassung (z.B. Aufnahme mit oder ohne Blitz usw.) oder in Abhängigkeit von den Klassen wahlweise die Maskierung abgeschwächt oder verstärkt werden.

Die nach obigem Verfahren berechneten ersten Masken können auch noch zusätzlich bearbeitet werden. So kann insbesondere eine Glättung nützlich sein, welche die bereits erwähnte optische Unschärfe unterstützt.

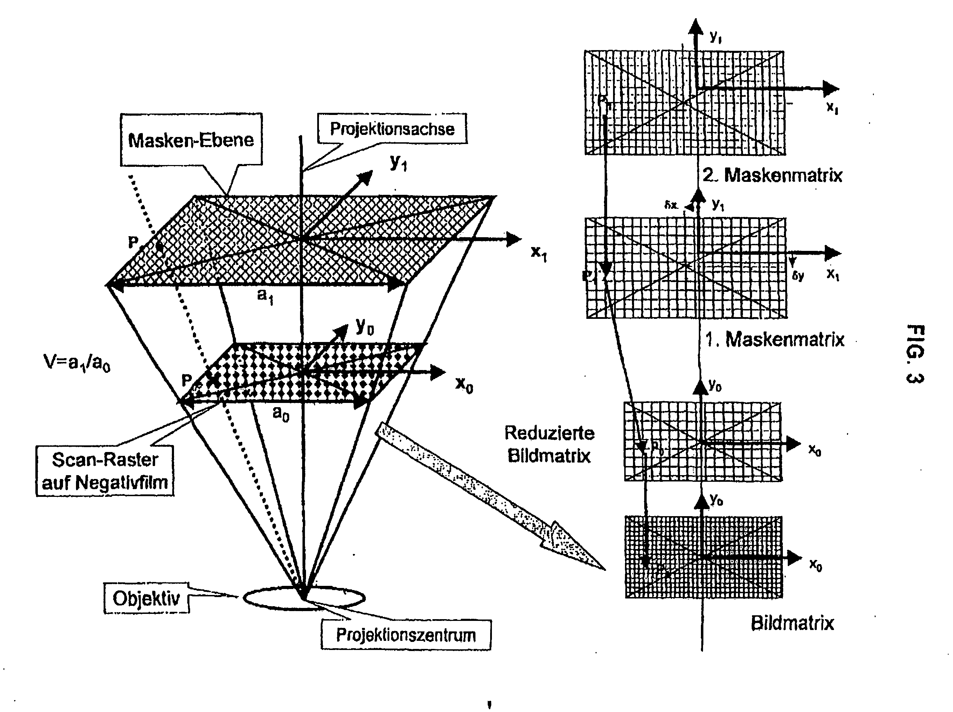

Fig. 3 zeigt schematisch die bei der Umrechung von einer Matrix auf eine andere Matrix verwendeten geometrischen Transformationen. Dabei entspricht die dargestellte Bildmatrix der fotografischen Bildinformation und die dargestellte reduzierte Bildmatrix den fotografischen Bilddaten.

Aufgrund der bekannten geometrischen Verhältnisse (Abstand der Filmebene von der Objektivpupille, Abstand zwischen Film- und Maskenebenen) sowie der Kenntnis eines möglichen Versatzes des physikalischen Zentrums der Maske zur Projektionsachse läßt sich zu jedem Punkt $P_1$ mit Koordinaten $(xl, y1)$ in der Maskenebene ein entsprechender Punkt $P_0$ mit Koordinaten $(x_0, y_0)$ in der Filmebene bestimmen (und umgekehrt). Aus der Kenntnis der Scannerauflösung in der $x_0$- und $y_0$-Richtung, der Maskenauflösung in der $x_1$- und $y_1$-Richtung und der Kenntnis der Reduktionsfaktoren $M_1/M_2$, $N_1/N_2$, $M_2/M_3$, $N_2/N_3$ läßt sich so zu jedem Element einer der Matrizen ein "zugeordnetes Element" sowie eine zugeordnete Umgebung (zugeordneter Bereich) in den anderen drei Matrizen bestimmen. Hierbei wird darauf hingewiesen, daß die Dimension $M_1$, $N_1$ die Dimension der unreduzierten digitalen Bilddaten ist. Eine Matrix mit der Dimension $M_2 x N_2$ stellt die (reduzierten) fotografischen Bilddaten dar, die der Maskenberechnung zugrundegelegt werden. Die Dimension der ersten Maske ist ebenfalls bevorzugt gleich $M_2 x N_2$. Die Dimension der aus der ersten Maske abgeleiteten zweiten Maske beträgt $M_3 x N_3$.

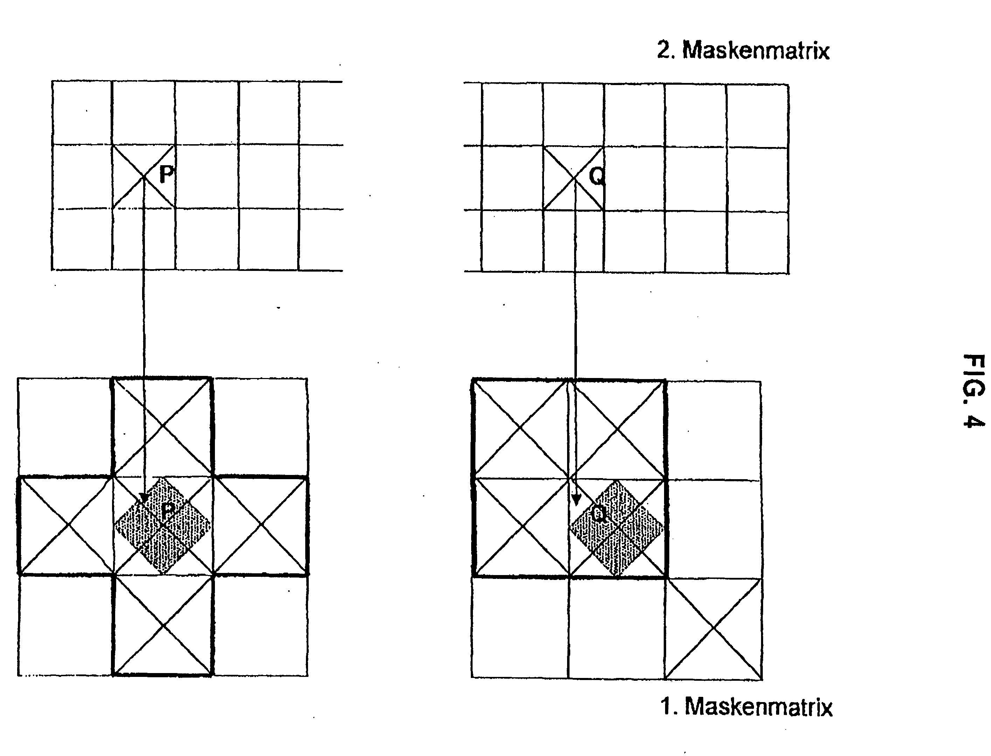

Fig. 4 zeigt, ein Beispiel wie eine "zugehörige Umgebung" (zugehöriger Bereich bzw. Manipulations-Bereich) bestimmt wird. Diese Bestimmung wird bevorzugt vorgenommen, um eine Umrechnung von der ersten Maskenmatrix (erste Maske) zur zweiten Maskenmatrix (zweite Maske) zu erzielen.

Eine lokal unterschiedliche Manipulation der Helligkeitsmaske wird bevorzugt so erzielt, daß bei der Berechnung eines jeden Elements der zweiten Maskenmatrix die Eigenschaften bzw. Merkmale der zugeordneten Umgebung (des zugeordneten Bereichs) der ersten Matrix berücksichtigt werden.

Bei der Zuordnung wird zuerst der geometrische Mittelpunkt (P bzw. Q) eines Elements der zweiten Maske ermittelt. Aufgrund der Koordinaten dieses Punktes kann dem Element der zweiten Maske eine Element der ersten Maske zugeordnet werden, wie in der Figur dargestellt ist. Die Bestimmung der "zugeordneten Umgebung" erfolgt aufgrund der Abstände von P (bzw. Q) zu den geometrischen Mittelpunkten der benachbarten Elemente der ersten Maskenmatrix. Es werden dabei zwei Fälle unterschieden:

- Liegt P (bzw. Q) innerhalb des schraffierten hochgestellten Quadrates im zugeordneten Pixel, so besteht die "zugeordnete Umgebung" aus fünf Elementen der ersten Maskenmatrix, wie in Fig. 4 auf der linken Seite veranschaulicht ist.

- Liegt Q (bzw. P) außerhalb des erwähnten Quadrats, so besteht die "zugeordnete Umgebung" aus vier Elementen der ersten Maskenmatrix, wie in Fig. 4 auf der rechten Seite veranschaulicht ist.

In beiden Fällen handelt es sich bei der "zugeordneten Umgebung" um die (vier bzw. fünf) Elemente der ersten Maskenmatrix mit kleinstem Abstand der geometrischen Mittelpunkte zu P bzw. Q.

Eine effiziente Berechnung der zweiten aus der ersten Matrix erfolgt vorzugsweise anhand einer im voraus berechneten Tabelle, welche zu jedem Element der zweiten Maskenmatrix die Anzahl und die Indizes der Elemente der "zugeordneten Umgebung" in der ersten Maskenmatrix enthält. Mit einer solchen Tabelle lassen sich auch die am Rande der Matrizen entstehenden Spezialfälle elegant berücksichtigen.

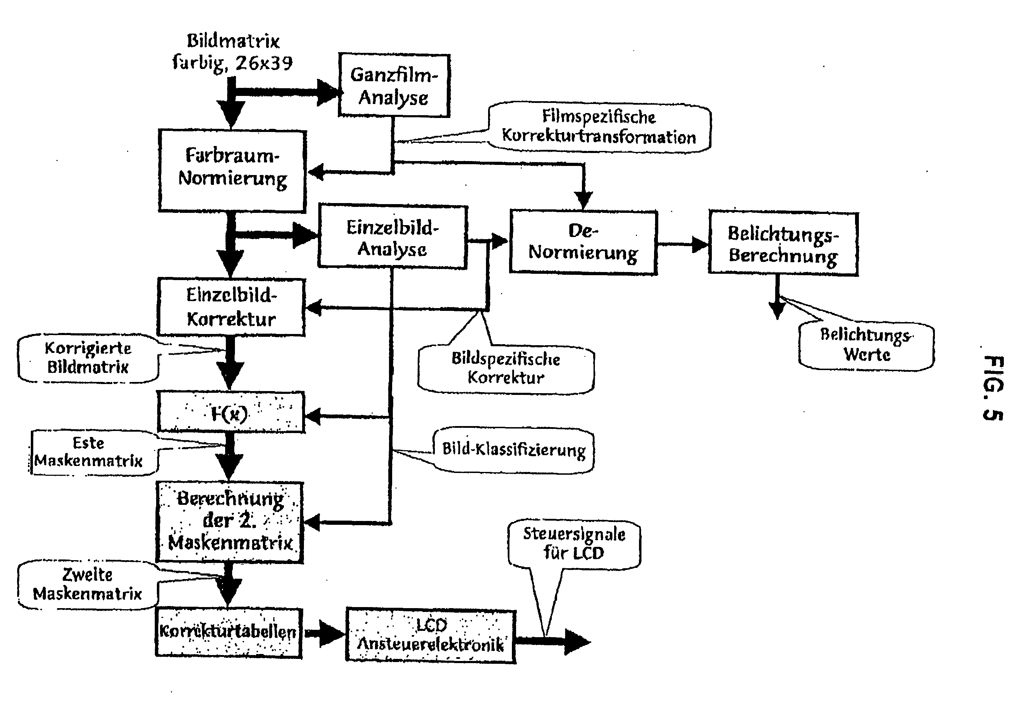

Fig. 5 stellt die Daten- und Signalflüsse im Falle eines optisch-fotografischen Printers dar, welcher als Kopiervorlagen (fotografische Bildinformation) einen Negativfilm verwendet.

Die Eingangsbildmatrix liegt mit einer Auflösung von 26 x 39 vor, so daß sich eine Reduktionsstufe erübrigt. Die Farbdaten liegen bereits in einem Farbraum vor, in welchem eine der Achsen die Helligkeit beschreibt. Sie werden aus den spektralen Meßdaten mittels der "Karhunen Loève"-Transformation ermittelt, wie in der EP 0 475 897 beschrieben ist. Als erstes wird aufgrund der Meßdaten eines ganzen Films eine filmspezifische Korrekturtransformation ermittelt, wie in der EP 0 586 773 erläutert ist. Die dieser Transformation ("Farbraumnormierung") unterworfenen Bildmatrizen (fotografische Bilddaten) werden einzeln analysiert und klassifiziert. Die sich aus der Analyse ergebenden Bildkorrekturen werden einerseits auf die normierten Bildmatrizen angewandt, andererseits dienen sie zu der Bestimmung der Belichtungswerte, mit welchen das entsprechende Negativ kopiert werden soll. Die der filmspezifischen und bildspezifischen Korrektur unterworfene Bildmatrix (optimierte Bilddaten) wird nun zur Berechnung der ersten Maskenmatrix verwendet. Aufgrund der in der Einzelbildanalyse ermittelten Bildklasse wird dabei eine für diese Klasse optimierte Funktion F(x) verwendet, die bevorzugt die gewünschten Helligkeitsänderungen bewirken soll.

In einem nächsten Schritt wird die zweite Maskenmatrix berechnet. Dabei kann ein Element $X_2(i_0,j_0)$ der zweiten Maskenmatrix z.B. wie folgt aus den Elementen $X_1(m,n)$ der ersten Maskenmatrix wie folgt berechnet werden:

Es sei $U(i_0,j_0)$ ein dem Element $X_2(i_0,j_0)$ zugeordneter Bereich der matrix $X_1$, z.B. $U(i_0,j_0) = \{(m_0,n_0), (m_0+1,n_0), (m_0-1,n_0) (m_0,n_0+1), (m_0,n_0-1), (m_0+1,n_0+1), (m_0+1,n_0-1), (m_0-1,n_0+1), (m_0-1,n_0-1)\}$ und $N(i_0,j_0)$ die Anzahl der Elemente in $U(i_0,j_0)$.

| | |
|---|---|
| $Max(i_0,j_0) = Max\{(X1(m,n), (m,n) \, \varepsilon \, U(i_0,j_0)\}$: | Maximum der Elemente von X1 im Bereich U |
| $Min(i_0,j_0) = Min\{(X1(m,n), (m,n) \, \varepsilon \, U(i_0,j_0)\}$ : | Minimum der Elemente von X1 im Bereich U |
| $Mean(i_0,j_0) = \Sigma \, X1(m,n) / N(i_0,j_0) \, (m,n) \, \varepsilon \, U(i_0,j_0)$: | Mittelwert der Elemente von X1 im Bereich U (statt des gewöhnlichen kann auch ein gewichteter Mittelwert mit Tiefpaßwirkung verwendet werden) |
| $Med(i_0,j_0)= Median\{X1(m,n), (m,n) \, \varepsilon \, U(i_0,j_0)$: | Median der Elemente von X1 im Bereich U (im Bereich U gibt es (etwa) ebensoviele Elemente von X1 kleiner wie größerals "Med") |

Dann kann für die Berechnung von $X_2$ beispielsweise die Formel
$X_2(i_0,j_0) = \alpha_{Max}*Max(i_0,j_0)+\alpha_{Min}*Min(i_0,j_0)+\alpha_{Mean}*Mean(i_0,j_0)+\alpha_{Med}*Med(i_0,j_0)$ (mit $\alpha_{Max}, \alpha_{Min}, \alpha_{Mean}, \alpha_{Med} \geq 0$ und $\alpha_{Max} + \alpha_{Min} + \alpha_{Mean} + \alpha_{Med} = 1$) verwendet werden.

Die oben erwähnten Parameter $\alpha_{Max}, \alpha_{Min}, \alpha_{Mean}, \alpha_{Med}$ werden bevorzugt in Abhängigkeit von der Klasse gewählt, um ein optimales Ergebnis zu erhalten.

Die oben beschriebenen Funktionen Mean und Median entsprechen einer Glättung. Wird z.B. die Standardabweichung als Funktion verwendet, so ist dies ein Maß für den Detailkontrast. Durch die Standardabweichungsfunktion kann erreicht werden, daß Bereiche mit wenig Bildinformation schwächer maskiert werden. Die Minimum-Funktion bewirkt eine "vorsichtige" Maskierung. Sie kann zur Vermeidung störender Nebeneffekte (Kantenüberschwingen) dienen, die sich bei starker Maskierung einstellen können. Die Verwendung der Standardabweichungsfunktion bewirkt somit eine je nach den lokalen Eigenschaften des Bildes (geringer oder hoher Informationsgehalt) unter schiedliche Manipulation der Werte der Helligkeitsmaske. Die Funktion Maximum kann zur Reduktion von Kantenunterschwingen dienen.

Bevor mit den somit erhaltenen Maskenwerten eine Flüssigkristallmatrix über eine LCD-Ansteuerelektronik angesteuert wird, werden bevorzugt die Maskenwerte nochmals korrigiert. Dazu sind bevorzugt Korrekturtabellen vorgesehen. Durch die Korrektur werden durch die optische Abbildung bzw. die optische Anordnung (insbesondere wie in Fig. 1a schematisch gezeigt) bedingte Inhomogenitäten im Helligkeitsprofil der fotografischen Abbildung berücksichtigt. Es können aber auch durch das Abbildungsmedium (Fotopapier) bedingte Inhomogenitäten bzw. für das verwendete Medium spezifische Eigenschaften berücksichtigt werden. Insbesondere werden örtliche Inhomogenitäten der Flüssigkristallmatrix und Inhomogenitäten bei der Ausleuchtung in der Abbildungsebene bzw. Kopierebene sowie insbesondere die spezifische Spannungs-Transmissionskurve des Flüssigkristalls berücksichtigt. Die LCD-Ansteuerelektronik wird dann mit diesen korrigierten Maskenwerten angesteuert.

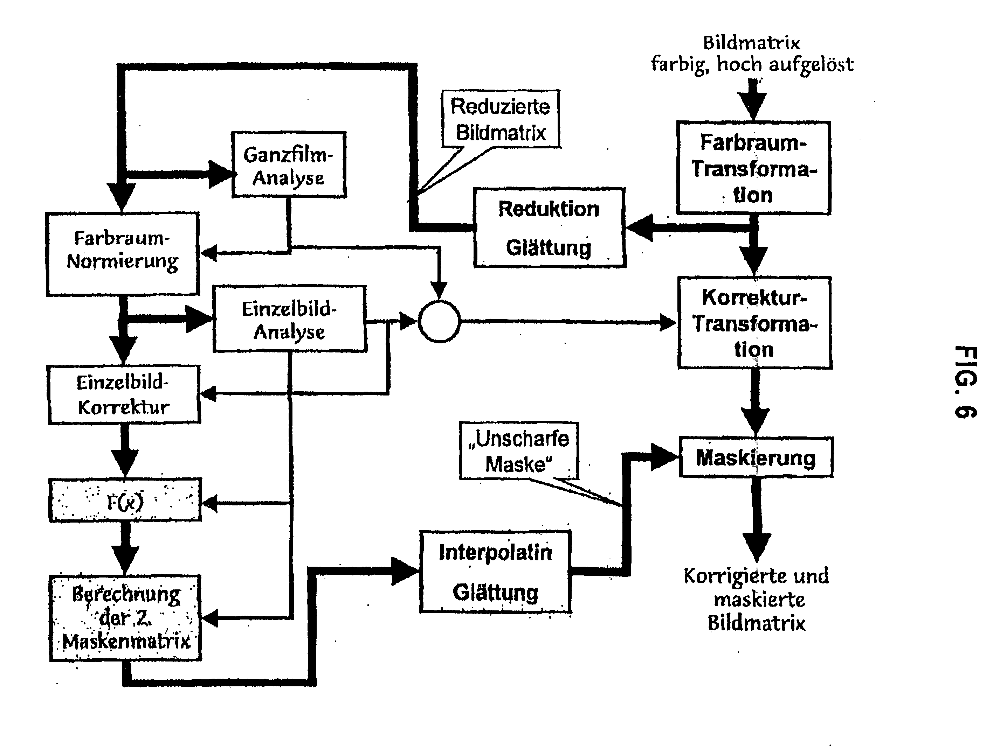

Fig. 6 stellt die Daten- und Signalflüsse im Falle eines digitalen Printers dar, bei welchem als Kopiervorlagen (fotografische Bildinformation) ebenfalls Negative verwendet werden.

Soweit in der Fig. 6 dieselben Funktionsblöcke verwendet werden wie in der Fig. 5, wird auf die Beschreibung der Fig. 5 verwiesen. Unterschiede zwischen der Fig. 5 und der Fig. 6 bestehen in den für die optische Abbildung spezifischen Einheiten, wie die Belichtungsberechnung und die Ansteuerung der LCD.

Die in Fig. 6 eingehende fotografische Bildinformation liegt in der Form einer farbigen und hochaufgelösten Bildmatrix (in RGB-Form) vor. Diese Bildmatrix wird vorteilhaft zunächst in einen Farbraum transformiert, in welchem eine der Achsen wiederum die Helligkeit beschreibt. Die so transformierte Bildmatrix wird zum Zwecke der Filmanalyse, Bildanalyse und Maskenberechnung auf eine niedrigere Auflösung reduziert.

Diese reduzierte Bildmatrix (fotografische Bilddaten) hat nun Eigenschaften, die mit jener der Eingangsbildmatrix in Fig. 5 vergleichbar ist.

Die sich aus der Analyse ergebenden Korrekturen werden nicht nur zur Maskenberechnung verwendet, sondern werden bevorzugt auch zur Korrektur der hochaufgelösten Bildmatrix verwendet (Korrektur-Transformation).

Die zweite Maskenmatrix wird, wie hierin beschrieben, ermittelt. Mittels Interpolation und Tiefpaßfilterung wird sie auf eine hohe Auflösung aufgebläht, die der Bildmatrix überlagert wird.

Die beschriebene Erfindung betrifft auch eine Software oder ein Programm (insbesondere kompilierte Software) zur Ausführung des erfindungsgemäßen Verfahrens sowie ein computerlesbares Speichermedium (CD-ROM, DVD, Diskette, Festplatte, etc.) mit der darauf gespeicherten erfindungsgemäßen Software.

**Patentansprüche**

1. Verfahren zum Bestimmen einer Maske zum Ändern eines Helligkeitsprofils einer fotografischen Abbildung mit den folgenden Schritten:

   a) fotografische Farbbilddaten werden aus einer fotografisch erfaßten Bildinformation abgeleitet;
   **gekennzeichnet durch**:
   b) optimierte Farbbilddaten werden **durch** Korrektur der fotografischen Farbbilddaten gewonnen, indem die bei der fotografischen Erfassung der Bildinformation entstandenen Fehler berücksichtigt werden, wobei aus den optimierten Farbbilddaten entsprechende Grauwerte bestimmt werden; und
   c) eine Helligkeitsmaske, deren Werte eine Beeinflussung des Helligkeitsprofils der fotografischen Abbildung verkörpern, wird basierend auf den optimierten Farbbilddaten bestimmt, wobei hierzu die bestimmten Grauwerte herangezogen werden.

2. Verfahren nach Anspruch 1, **dadurch gekennzeichnet, daß** Merkmale aus den optimierten Bilddaten durch Analyse der optimierten Bilddaten extrahiert werden und die optimierten Bilddaten vor dem Schritt c) und/oder die Werte der Helligkeitsmatrix im Schritt c) in Abhängigkeit von den extrahierten Merkmalen modifiziert werden.

3. Verfahren nach Anspruch 2, **dadurch gekennzeichnet, daß** die abzubildende Bildinformation basierend auf den extrahierten Merkmalen klassifiziert wird und die Modifikation in Abhängigkeit von dem Klassifizierungsergebnis erfolgt.

4. Verfahren nach Ansprüchen 1 bis 3, **dadurch gekennzeichnet, daß** Werte der Helligkeitsmaske in Abhängigkeit von Merkmalen eines dem jeweiligen Wert lokal zugeordneten Bereiches der fotografischen Bilddaten, optimierten Bilddaten und/oder der Helligkeitsmaske modifiziert werden.

5. Verfahren nach einem der vorhergehenden Ansprüche, **dadurch gekennzeichnet, daß** eine durch die Helligkeitsmatrix bewirkte Aufhellung dunkler Bereiche nicht mehr durchgeführt wird oder abgeschwächt wird, wenn der Dunkelgrad eine vorbestimmte Schwelle überschreitet.

6. Verfahren nach einem der vorhergehenden Ansprüche, **dadurch gekennzeichnet, daß** im Schritt c) jedem optimierten Bilddatum nur ein Maskenwert zugeordnet wird, aus dem dann die Helligkeitsmaske bestimmt wird.

7. Verfahren nach Anspruch 6, **dadurch gekennzeichnet, daß** die zugeordneten Maskenwerte Matrizenelemente einer ersten Maskenmatrix bilden und eine zweite Maskenmatrix aus der ersten Maskenmatrix berechnet wird, wobei jedem Matrizenelement der zweiten Maskenmatrix ein Matrizenelement der ersten Maskenmatrix zugeordnet wird und der Wert eines jeden Matrizenelements der zweiten Maskenmatrix sich aus denjenigen Werten der Matrizenelemente der ersten Maskenmatrix berechnen, die in einem zugeordneten Bereich der ersten Maskenmatrix enthalten sind, der das zugeordnete Matrizenelement und die das zugeordnete Matrizenelement umgebende Matrizenelemente umfasst, wobei die zweite Maskenmatrix die Helligkeitsmaske bildet.

8. Verfahren nach Anspruch 7, **dadurch gekennzeichnet, daß** bei der Berechnung eines jeden Elements der zweiten Maskenmatrix die Merkmale des dem Element zugeordneten Bereichs der ersten Maskenmatrix berücksichtigt werden.

**9.** Verfahren nach einem der vorhergehenden Ansprüche, **dadurch gekennzeichnet, daß** die Ableitung der fotografischen Bilddaten gemäß Schritt a) eine verlustbehaftete Reduktion des Datenumfangs beinhaltet.

**10.** Verfahren nach einem der vorhergehenden Ansprüche, **dadurch gekennzeichnet, daß** die Anzahl der Maskenwerte kleiner als 2.000, bevorzugt ca. 1.000 ist.

**11.** Verfahren zum Ändern des Helligkeitsprofils einer fotografischen Abbildung, bei welchem eine fotografische Abbildung basierend auf einer fotografischen Bildinformation erzeugt wird, **dadurch gekennzeichnet, daß**
eine Helligkeitsmaske nach einem der Ansprüche 1 bis 10 berechnet wird, und daß
die Helligkeitsmaske mit der abzubildenden Bildinformation zur Beeinflussung des Helligkeitsprofils der fotografischen Abbildung überlagert wird.

**12.** Verfahren nach Anspruch 11, **dadurch gekennzeichnet, daß** die Überlagerung optisch mit einer Lichtdichte-Steuereinrichtung erfolgt, die flächig aufgelöst die Lichtdichte in den verschiedenen Bereichen der zu erstellenden Kopie bei der Belichtung des Kopiermaterials steuert, indem die Lichtdichte-Steuereinrichtung basierend auf den Werten der Helligkeitsmatrix angesteuert wird.

**13.** Verfahren nach Anspruch 11, **dadurch gekennzeichnet, daß** die Überlagerung rechnerisch erfolgt und das rechnerische Ergebnis zur Steuerung eines Ausdrucks der fotografischen Abbildung dient.

**14.** Optischer Printer zur Erstellung fotografischer Abbildungen,
mit einer Lichtdichte-Steuereinrichtung, mit der flächig aufgelöst die Lichtdichte in verschiedenen Bereichen einer zu erstellenden fotografischen Abbildung bei der Belichtung fotografischen Kopiermaterials steuerbar ist,
mit einer digitalen Datenverarbeitungseinrichtung, die eine Helligkeitsmaske nach dem Verfahren der Ansprüche 1 bis 10 bestimmt und die mit den Werten der Helligkeitsmaske die Lichtdichte-Steuereinrichtung ansteuert.

**15.** Digitaler Printer zum Ausdrucken fotografischer Abbildungen basierend auf digitaler fotografischer Bildinformation,
mit einer Ausdruckeinrichtung zum Ausbilden einer fotografischen Abbildung aufgrund der digitalen fotografischen Bildinformation,
**gekennzeichnet durch** eine Datenverarbeitungseinrichtung, die eine Helligkeitsmaske aus der digitalen fotografischen Bildinformation gemäß dem Verfahren der Ansprüche 1 bis 10 bestimmt und die die Werte der bestimmten Helligkeitsmaske mit der digitalen fotografischen Bildinformation rechnerisch überlagert, wobei das Ergebnis der Überlagerung **durch** die Ausdruckeinrichtung ausgedruckt wird.

**Claims**

**1.** Process to define a mask to modify a brightness profile of a photographic image with the following steps:

a) photographic colour image data is derived from image information acquired photographically;
**characterized by**:
b) optimised colour image data are obtained by correction of the photographic colour image data by taking into account the errors arising during the photographic acquisition of the image information, whereby corresponding grey values are determined from the optimised colour image data; and
c) a brightness mask whose values embody an influencing of the brightness profile of the photographic imaging is determined based on the optimised colour image data, whereby the grey values that were determined are referred to for this purpose.

**2.** Process according to Claim 1, **characterized in that** characteristic features are extracted from the optimised image data by analysis of the optimised image data, and the optimised image data before Step c) and/or the values of the brightness matrix in Step c) are modified as a function of the characteristic features that are extracted.

**3.** Process according to Claim 2, **characterized in that** the image information that is to be imaged is classified based on the extracted characteristic features and the modification takes place depending on the result of the classification.

**4.** Process according to Claims 1 to 3, **characterized in that** the values of the brightness mask are modified as a function of characteristic features of a region of the photographic image data locally assigned to the respective value, optimised image data and/or the brightness mask.

5. Process according to one of the foregoing Claims, **characterized in that** a lightening of dark regions caused by the brightness matrix is no longer performed or is attenuated if the degree of darkness exceeds a predefined threshold.

6. Process according to one of the foregoing Claims, **characterized in that**, in Step c), each optimised item of image data is assigned only one mask value from which the brightness mask is then determined.

7. Process according to Claim 6, **characterized in that** the assigned mask values form matrix elements of a first mask matrix and a second mask matrix is calculated from the first mask matrix, whereby one matrix element of the first mask matrix is assigned to each matrix element of the second mask matrix and the value of each matrix element of the second mask matrix is calculated from those values of the matrix elements of the first mask matrix that are contained in an assigned region of the first mask matrix that comprises the assigned matrix element and the matrix elements surrounding the assigned matrix element, whereby the second mask matrix forms the brightness mask.

8. Process according to Claim 7, **characterized in that** the characteristic features of the region of the first mask matrix assigned to the element are taken into account in the calculation of each element of the second mask matrix.

9. Process according to one of the foregoing Claims, **characterized in that** the derivation of the photographic image data according to Step a) includes a loss-producing reduction of the amount of data.

10. Process according to one of the foregoing Claims, **characterized in that** the number of mask values is smaller than 2,000 and is preferably approx. 1,000.

11. Process to modify the brightness profile of a photographic image in which a photographic image is generated based on photographic image information, **characterized in that**
    a brightness mask is calculated according to one of the Claims 1 to 10, and **in that**
    the brightness mask is superimposed on the image information that is to be imaged, in order to influence the brightness profile of the photographic imaging.

12. Process according to Claim 11, **characterized in that** the superimposition takes place optically using a light intensity control device that controls in an area-resolved manner the light intensity in the various regions of the copy that is to be produced, during the illumination of the copier (printer) material, by driving the light intensity control device based on the values of the brightness matrix.

13. Process according to Claim 11, **characterized in that** the superimposition takes place computationally and the computed result is used to control a print-out of the photographic image.

14. Optical printer to produce photographic images (prints),
    with a light intensity control device with which the light intensity in various regions of a photographic image that is to be prepared is controllable in an area-resolved manner during the illumination (exposure) of photographic copying (printing) material,
    with a digital data processing device that determines a brightness mask according to the method of Claims 1 to 10 and which drives the light intensity control device using the values of the brightness mask.

15. Digital printer to print out photographic images based on digital photographic image information,
    with a print-out device to image a photographic image based on digital photographic image information,
    **characterized by** a data processing device that determines a brightness mask from the digital photographic image information according to the method of Claims 1 to 10 and computationally superimposes the values of the brightness mask that is determined on the digital photographic image information, whereby the result of the superimposition is printed out by the print-out device.

**EP 1 024 400 B1**

**Revendications**

1.  Procédé de détermination d'un masque destiné à modifier une distribution de luminance d'un tirage photographique comprenant les étapes suivantes :

    a) les données photographiques d'image en couleur sont déduites d'une information d'image prise de manière photographique ;
    **caractérisé en ce que** :
    b) les données d'image en couleur optimisées sont obtenues par la correction des données d'image en couleur photographiques, en prenant en considération les erreurs produites lors de la prise photographique de l'information d'image, des niveaux de gris correspondants étant déterminés à partir des données d'image en couleur optimisées ; et
    c) un masque de luminance, dont les valeurs représentent une influence de la distribution de luminance du tirage photographique, est déterminé en se basant sur les données d'image en couleur optimisées, les valeurs de gris déterminées étant rapprochées à cet effet.

2.  Procédé selon la revendication 1, **caractérisé en ce que** des caractéristiques sont extraites des données d'image optimisées par l'analyse des données d'image optimisées et les données d'image optimisées sont modifiées avant l'étape c) et/ou les valeurs de la matrice de luminance sont modifiées à l'étape c) en fonction des caractéristiques extraites.

3.  Procédé selon la revendication 2, **caractérisé en ce que** l'information d'image à tirer est classifiée en se basant sur les caractéristiques extraites et la modification se fait en fonction du résultat de la classification.

4.  Procédé selon les revendications 1 à 3, **caractérisé en ce que** les valeurs du masque de luminance sont modifiées en fonction des caractéristiques d'une zone des données d'image photographiques associées localement à la valeur respective, des données d'image optimisées et/ou du masque de luminance.

5.  Procédé selon l'une des revendications précédentes, **caractérisé en ce qu'**un éclaircissement de zones obscures accompli par la matrice de luminance n'est plus réalisé ou est atténué, lorsque le degré d'obscurité dépasse un seuil prédéterminé.

6.  Procédé selon l'une des revendications précédentes, **caractérisé en ce qu'**à l'étape c), seule une valeur de masque est associée à chaque donnée d'image optimisée, valeur à partir de laquelle est ensuite déterminé le masque de luminance.

7.  Procédé selon la revendication 6, **caractérisé en ce que** les valeurs de masque associées forment les éléments de matrice d'une première matrice de masque et une seconde matrice de masque est calculée à partir de la première matrice de masque, à chaque élément de matrice de la seconde matrice de masque étant associé un élément de matrice de la première matrice de masque et la valeur de chaque élément de matrice de la seconde matrice de masque se calculant à partir des valeurs des éléments de matrice de la première matrice de masque qui sont contenues dans une zone associée de la première matrice de masque, qui comprend l'élément de matrice associé et les éléments de matrice entourant l'élément de matrice associé, la seconde matrice de masque formant le masque de luminance.

8.  Procédé selon la revendication 7, **caractérisé en ce que** lors du calcul de chaque élément de la seconde matrice de masque, les caractéristiques de la zone de la première matrice de masque associées à l'élément sont prises en compte.

9.  Procédé selon l'une des revendications précédentes, **caractérisé en ce que** la déduction des données d'image photographiques selon l'étape a) implique une réduction du volume de données sujette aux pertes.

10.  Procédé selon l'une des revendications précédentes, **caractérisé en ce que** le nombre des valeurs de masque est inférieur à 2000, est de préférence d'environ 1000.

11.  Procédé de modification de la distribution de luminance d'un tirage photographique, dans lequel un tirage photographique est produit en se basant sur une information d'image photographique, **caractérisé en ce que** un masque de luminance selon les revendications 1 à 10 est calculé, et **en ce que**

**15**

le masque de luminance est superposé à l'information d'image destinée à tirer afin d'influencer la distribution de luminance du tirage photographique.

**12.** Procédé selon la revendication 11, **caractérisé en ce que** la superposition se fait de manière optique avec un dispositif de commande de l'opacité, qui commande par une restitution à deux dimensions l'opacité dans les différentes zones de la copie à établir, lors de l'exposition du matériau de tirage, en commandant le dispositif de commande de l'opacité en se basant sur les valeurs de la matrice de luminance.

**13.** Procédé selon la revendication 11, **caractérisé en ce que** la superposition se fait de manière mathématique et le résultat informatique sert à commander une impression du tirage photographique.

**14.** Imprimante optique destinée à établir des tirages photographiques,
comprenant un dispositif de commande de l'opacité, avec lequel par une restitution à deux dimensions, l'opacité peut être commandée dans différentes zones d'un tirage photographique à établir lors de l'exposition du matériau de tirage photographique
comprenant un dispositif de traitement numérique des données, qui détermine un masque de luminance selon le procédé des revendications 1 à 10 et qui commande avec les valeurs du masque de luminance le dispositif de commande de l'opacité.

**15.** Imprimante numérique destinée à imprimer des tirages photographiques en se basant sur une information d'image photographique numérique,
comprenant un dispositif d'impression destiné à concevoir un tirage photographique du fait de l'information d'image photographique numérique,
**caractérisé par** un dispositif de traitement des données, qui détermine un masque de luminance à partir de l'information d'image photographique numérique selon le procédé des revendications 1 à 10 et qui superpose de façon mathématique les valeurs du masque de luminance déterminé à l'information d'image photographique numérique, le résultat de la superposition étant imprimé par le dispositif d'impression.

## FIG. 1a

FIG. 1b

# FIG. 2

# FIG. 3

# FIG. 4

# FIG. 5

# FIG. 6